# FASCICULE DE BREVET EUROPEEN

(11) **EP 0 428 886 B1**
(45) Date de publication et mention de la délivrance du brevet: **29.12.1993**
(21) Numéro de dépôt: 90120349.7
(22) Date de dépôt: 24.10.1990
(51) Int. Cl.: A63C 5/12

(54) **Procédé de fabrication d'un ski injecté et structure de ski**
Verfahren zur Herstellung eines gespritzten Skis und Skistruktur
Method of fabrication of an injected ski and structure of a ski

(30) Priorité: 22.11.1989 FR 8915664
(43) Date de publication de la demande: 29.05.1991
(73) Titulaire: SALOMON S.A., 74370 Pringy (FR)
(72) Inventeur: Cazaillon, Jean-Mary, F-74000 Cran Gevrier (FR); Chatellard, Bernard, F-74290 Veyrier du Lac (FR)

(56) Documents cités:
- EP-A- 0 017 792
- EP-A- 0 309 403
- AT-B- 366 270
- FR-A- 2 553 669

## Description

La présente invention concerne la fabrication des skis utilisés en sports d'hiver, et destinés à glisser sur la neige et la glace. Elle concerne également une structure de ski en tant que telle.

Les skis actuels ont généralement une structure composite dans laquelle sont combinés différents matériaux de manière que chacun d'eux intervienne de façon optimale, compte-tenu de la distribution des contraintes mécaniques. Ainsi, la structure comprend généralement des éléments de protection périphérique, formant la face supérieure et les faces latérales du ski, des éléments internes de résistance ou lames de résistance, constitués en un matériau ayant une grande résistance mécanique et une grande raideur. La structure comprend également des éléments de remplissage tels qu'un noyau en structure alvéolaire, une semelle de glissement formant la face inférieure du ski et assurant un bon glissement sur la neige, et des carres métalliques formant les arêtes inférieures du ski.

Pour obtenir les caractéristiques physiques appropriées, la fabrication des skis modernes fait donc appel à des matériaux très divers : les semelles de glisse sont généralement en polyéthylène ; les noyaux alvéolaires sont en mousse synthétique ; les carres sont en acier ; les surfaces supérieures du ski sont réalisées en feuilles thermoplastiques ; les lames de résistance sont des plaques de métal ou de résines armées de fibres.

Un ski est soumis à des contraintes mécaniques sévères, nécessitant une bonne adhérence entre les divers matériaux constituant la structure.

Dans les techniques traditionnelles de fabrication de skis par injection, on dispose dans la cavité intérieure d'un moule, contre les parois périphériques de la cavité, les éléments supérieur et inférieur du ski, et, si nécessaire, des éléments latéraux et on injecte, dans l'espace ainsi défini par les faces internes des éléments, les constituants d'une mousse durcissable telle qu'une mousse polyuréthane ou une mousse phénolique. Après expansion et durcissement, ladite mousse assure l'assemblage des éléments.

Un tel procédé est décrit dans les documents FR-A-2553669 et EP-A1-17792, par exemple.

La difficulté réside dans le fait que les mousses durcissables présentent des propriétés d'ahérence médiocres avec un certain nombre de matériaux destinés à constituer la structure du ski, ou présentent avec ces matériaux des incompatibilités. Notamment, on peut avantageusement constituer des éléments de renfort mécanique intérieurs de ski, ou lames de résistance, à partir de nappes de matière fibreuse préimprégnée de résine thermodurcissable ou thermoplastique. Lorsqu'un tel élément préimprégné forme la surface intérieure de l'espace destiné à être rempli de mousse durcissable, la mousse tend à s'infiltrer au travers de la matière fibreuse préimprégnée, ce qui produit à la fois une altération sensible des propriétés de résistance mécanique de l'élément de renfort et des défauts d'adhérence entre le noyau en mousse durcie et les autres matériaux du ski.

La présente invention a notamment pour objet d'éviter les inconvénients des procédés connus, en proposant un nouveau procédé de fabrication de ski injecté dans lequel la mousse durcissable injectée vient adhérer parfaitement aux parois du logement formé par les éléments externes du ski entre lesquels elle est injectée.

Selon l'invention, la mousse injectée ne perturbe aucunement les qualités intrinsèques des autres éléments constituant le ski.

Selon un autre objet de l'invention, le procédé est facile à mettre en oeuvre, rapide et économique, et peut être automatisé.

Pour atteindre ces objets ainsi que d'autres, le procédé de l'invention utilise, de manière connue, une étape d'injection des constituants d'une mousse durcissable, d'expansion et de durcissement de ladite mousse durcissable, entre au moins un premier élément et un second élément du ski. Selon l'invention, le procédé comprend au moins une étape préalable, au cours de laquelle on réalise le premier élément par la succession des opérations suivantes :
- prévoir un film solide dit "compatibilisant" à base de polymères présentant de bonnes propriétés d'adhésion avec la mousse durcissable lors de l'étape ultérieure d'injection,
- prévoir ledit premier élément sous forme d'un substrat dont la face interne est formée d'un renfort
- disposer ledit film solide compatibilisant sur ladite face interne du premier élément, pour recouvrir ledit renfort,
- former à chaud et sous pression le film dit "compatibilisant" et le premier élément pour faire adhérer le film au premier élément,

de sorte que, pendant l'étape ultérieure d'injection, le film solide dit "compatibilisant" constitue un écran entre la mousse durcissable et le renfort, et, après injection et durcissement, la mousse adhère parfaitement au film dit "compatibilisant" et au premier élément.

Dans la présente description et dans les revendications, l'expression "renfort" englobe non seulement les nappes préimprégnées individuelles de fils parallèles unidirectionnels, mais également les étoffes bidirectionnelles, les tissus, les grilles, les tresses, les voiles, les étoffes non tissées et leurs combinaisons ou les substrats du type acier, aluminium ou métal amorphe.

L'invention concerne également une structure particulière de ski en tant que telle.

Le ski présente une structure composite, comportant au moins un premier et un second élément solidarisés l'un à l'autre par un noyau en mousse cellulaire, un film de polymère étant disposé à l'interface entre ladite mousse cellulaire et l'un au moins desdits premier et second éléments, ledit élément étant au contact du film par une couche de renfort en résine armée de fibres.

D'autres objets, caractéristiques et avantages de la présente invention ressortiront de la description suivante de modes de réalisation particuliers, faite en relation avec les figures jointes, parmi lesquelles :
- les figures 1 et 2 illustrent les étapes de formation d'un premier élément, selon un premier mode de réalisation de l'invention ;
- les figures 3 à 5 illustrent trois structures de premier élément supérieur de ski selon l'invention ;
- la figure 6 illustre une structure d'élément inférieur de ski selon l'invention ;
- la figure 7 illustre l'étape d'injection dans un moule ;
- la figure 8 représente en coupe transversale une structure de ski obtenue selon l'invention ; et
- la figure 9 représente en coupe transversale une structure de ski selon un autre mode de réalisation.

Dans le mode de réalisation représenté sur les figures, le ski selon l'invention est constitué de deux sous-ensembles principaux, à savoir un sous-ensemble supérieur ou premier élément 1 et un sous-ensemble inférieur ou second élément 2, ces deux éléments étant réunis au moment de l'opération d'assemblage par injection d'une mousse durcissable 15 dans l'espace fermé formé par les sous-ensembles 1 et 2.

L'invention consiste à structurer de manière particulière la face intérieure 3 du premier élément 1 et/ou la face intérieure 4 du second élément 2, pour rendre cette face compatible avec la mousse 15. Cette compatibilité entraîne à la fois une bonne adhérence entre la mousse 15 et les éléments 1 et/ou 2, et une absence de détérioration desdits éléments par la mousse 15.

Pour cela, la structuration des faces internes 3 et/ou 4 s'effectue au moment de la fabrication du sous-ensemble 1 et/ou 2.

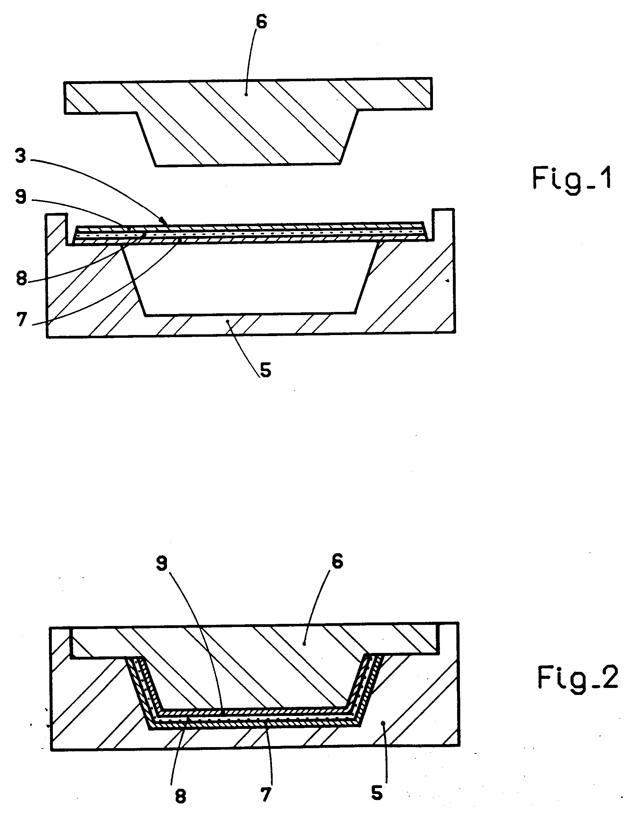

Par exemple, les figures 1 et 2 illustrent la formation d'un premier élément 1 ou sous-ensemble supérieur de ski. Dans un moule de formage à chaud comprenant une matrice inférieure 5 et un poinçon supérieur 6, on dispose un empilage de couches destinées à former le premier élément 1 : une plaque 7 destinée à former le dessus du ski une couche 8 destinée à former le renfort supérieur du ski ; un film solide compatibilisant 9 destiné à former la face intérieure 3 du premier élément 1.

La plaque 7 est en un matériau thermoplastique tel que : polyuréthane, polyamides P11, P12, P6 ou autre, styréniques de type ABS-SAN ou autre, polyoléfines de type polyéthylène ou polypropylène, polycarbonate, matière acrylique, polyester de type PET ou PBT, éventuellement modifié.

La couche 8 destinée à former le renfort est constituée d'une nappe textile de renfort préimprégnée d'une résine thermodurcissable ou d'une résine thermoplastique.

On peut notamment utiliser une nappe textile de renfort à base de fibres tissées ou non tissées en verre, en carbone ou en Kevlar, imprégnée d'une résine thermodurcissable humide ou partiellement réticulée choisie dans le groupe constitué par le polyester, les époxydes, les polyuréthanes.

En alternative, on peut utiliser une nappe textile de renfort à base de fibres tissées ou non tissées en verre ou en carbone imprégnée d'une résine thermoplastique choisie dans le groupe constitué par les polyamides, les polycarbonates, les PEI (Polyéther Imide).

Le film solide dit "compatibilisant" 9 est en polyuréthane non expansé ou en ABS (Acrylonitrile Butadiène Styrène) ou en copolyamide. Il peut présenter une épaisseur de quelques microns à quelques dixièmes de millimètre, avantageusement comprise entre un et dix dixièmes de millimètre, et éventuellement être multicouche.

Après disposition des couches 7, 8 et 9 sur la matrice 5, l'ensemble est chauffé et on abaisse le poinçon 6 pour fermer le moule comme le représente la figure 2.

Dans le cas d'un renfort 8 en nappe textile préimprégnée d'une résine thermodurcissable, l'opération de pressage à chaud représentée sur les figures 1 et 2 assure la réticulation ou le complément de réticulation de la résine thermodurcissable, et l'adhérence du film 9 sur le renfort 8. Après durcissement, on peut sortir le premier élément 1 du moule, et effectuer l'opération ultérieure d'injection.

Dans le cas d'une nappe textile de renfort préimprégnée d'une résine thermoplastique, l'opération de pressage à chaud représentée sur les figures 1 et 2 assure le formage à chaud des éléments pour constituer le premier élément 1. Après refroidissement, on peut sortir l'élément 1 du moule, et effectuer l'opération ultérieure d'injection.

Dans le cas d'un renfort métallique, le film 9 peut avantageusement être réalisé par un procédé de poudrage électrostatique.

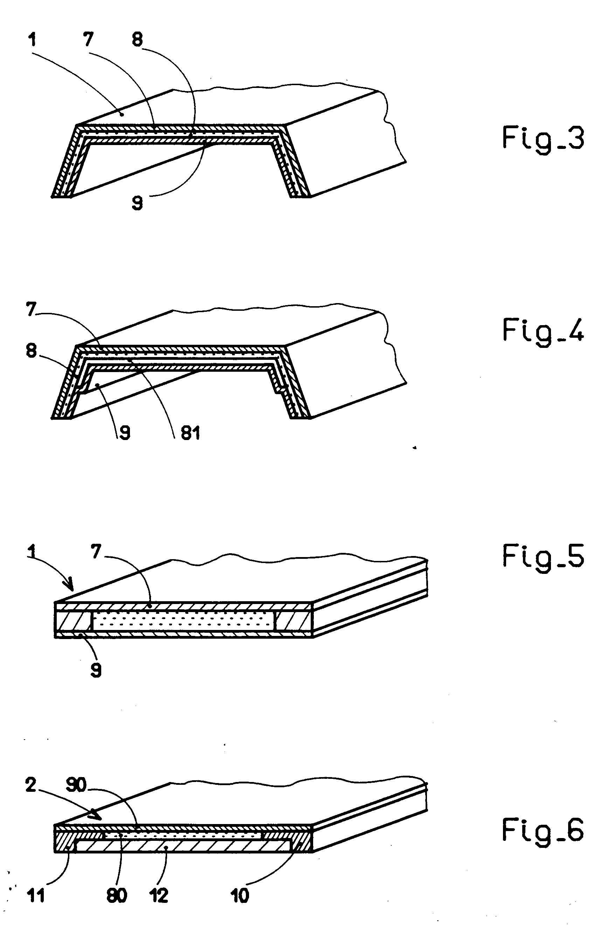

On a représenté, sur les figures 3 et 5, trois exemples de réalisation d'un premier élément 1 de ski. Sur la figure 3, le premier élément 1 correspond à la structure formée déjà représentée sur les figures 1 et 2 : l'élément 1 présente une forme en coupe trapézoïdale, à trois couches, la couche extérieure 7 étant destinée à former le dessus du ski, la couche intermédiaire 8 constituant le renfort mécanique supérieur du ski, la couche intérieure 9 constituée par le film dit "compatibilisant".

Sur la figure 4, la structure est sensiblement la même que sur la figure 3, la différence consistant en un renfort supplémentaire interne 81, couvrant la face interne de la paroi centrale du renfort 8 et une partie des faces internes de parois latérales. Le film 9 effectue, dans la zone du bord inférieur du renfort 81, un décrochement représenté sur les figures montrant que le film peut suivre en principe toute forme complexe des faces internes de l'élément 1.

Sur la figure 5, l'élément 1 est destiné à former un ski à structure en sandwich, et comprend également, sur sa face inférieure ou face interne, un film solide dit "compatibilisant" 9.

De même que sur un premier élément 1 ou sous-ensemble supérieur de ski, on peut prévoir un film dit "compatibilisant" 90 sur la face supérieure ou face interne d'un élément 2 destiné à former le sous-ensemble inférieur du ski. La figure 6 représente la structure d'un tel élément 2, comprenant les carres inférieures 10 et 11 en acier, la semelle inférieure 12 en polyéthylène, et un élément de renfort inférieur 80. L'élément inférieur 2 peut également être réalisé par pressage à chaud ou formage à chaud, le film compatibilisant 90 pouvant être en polyuréthane ou en copolyamide ou en ABS, l'élément inférieur de renfort 80 pouvant être formé d'une nappe textile préimprégnée de résine thermodurcissable ou thermoplastique ou d'un renfort acier ou aluminium ou métal amorphe.

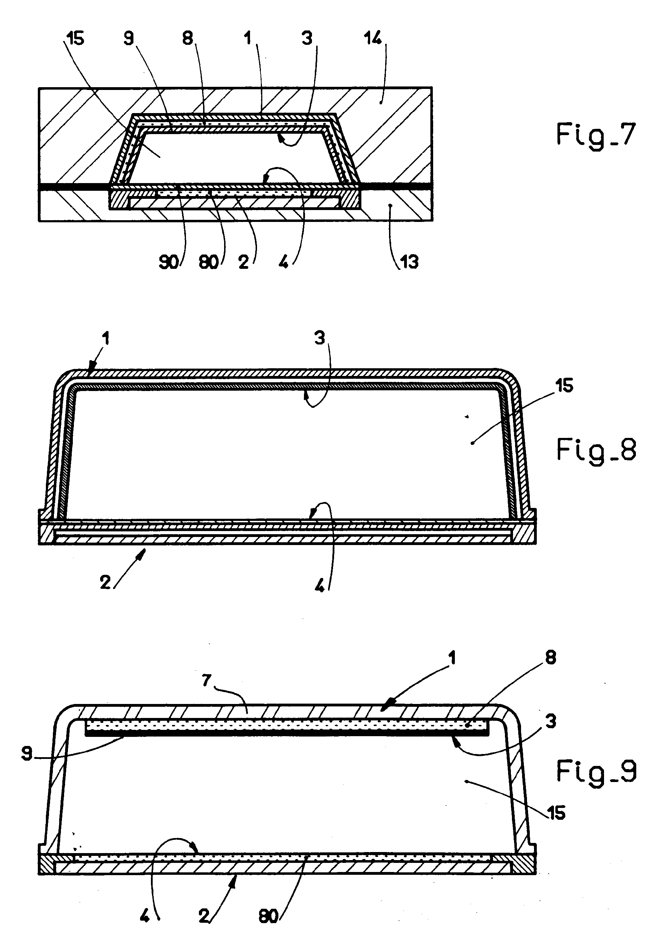

Après formation des premier et second éléments, on dispose ces premier et second éléments dans un moule d'injection, comme le représente la figure 7. Le moule d'injection comprend une coque inférieure 13 et une coque supérieure 14 formant un logement interne dans lequel sont insérés le premier élément 1 et le second élément 2 du ski. Ainsi disposés, le premier élément 1 et le second élément 2 forment une enceinte fermée dont la face interne est formée par la face interne 3 du premier élément 1 et la face interne 4 du second élément 2, faces formées par ces films dits "compatibilisants" 9 et 90. On injecte alors dans l'espace intérieur les constituants d'une mousse durcissable 15 pour remplir ledit espace intérieur. On peut, par exemple, injecter des isocyanates et des composés polyhydroxylés, afin de préparer une mousse 15 de polyuréthane. En alternative, on peut injecter les composés d'une mousse 15 phénolique. Pendant l'injection et l'expansion de la mousse 15 dans l'espace intérieur, la mousse 15 vient au contact des films 9 et 90 qui constituent un écran entre ladite mousse 15 et les renforts 8 et 80. La mousse 15 adhère parfaitement aux films 9 et 90.

Pendant le durcissement de la mousse 15, la réaction est généralement exothermique. L'élévation de température qui en résulte peut être utilisée pour compléter la réticulation des renforts 8 et 80, et contribue à réactiver les films 9 et 90 pour promouvoir l'adhérence entre les films et la mousse.

Si nécessaire, un complément d'apport de chaleur est assuré de l'extérieur, pour échauffer l'ensemble pendant une durée et selon une température suffisantes pour assurer une réticulation et un collage complets des éléments.

On peut ensuite démouler, et la structure de ski est ainsi assemblée, par exemple telle que représentée sur la figure 8.

La figure 9 représente une variante de la présente invention dans laquelle le renfort supérieur 8 est limité à une plaque supérieure en contact avec le dessus du ski 7. Ainsi, le film peut ne couvrir que la surface du renfort 8 et la mousse vient adhérer sur les côtés du dessus du ski 7.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication d'un ski injecté, comprenant une étape d'injection des constituants d'une mousse durcissable, d'expansion et de durcissement de ladite mousse durcissable, entre au moins un premier élément (1) et un second élément (2),
caractérisé en ce qu'il comprend au moins une étape préalable au cours de laquelle on réalise l'un au moins des éléments (1, 2) par la succession des opérations suivantes :
- prévoir un film solide (9) à base de polymères présentant de bonnes propriétés d'adhésion avec la mousse durcissable (15) lors de l'étape ultérieure d'injection,
- prévoir ledit élément (1, 2) sous forme d'un substrat dont la face interne est formée d'au moins un renfort (8),
- disposer ledit film solide (9) sur ladite face interne de l'élément (1, 2) pour recouvrir au moins ledit renfort,
- former ou presser à chaud le film (9) et l'élément (1, 2) pour faire adhérer le film (9) à l'élément (1, 2),
de sorte que, pendant l'étape ultérieure d'injection, le film solide (9) constitue un écran entre la mousse durcissable (15) et au moins le renfort (8), et, après injection et durcissement, la mousse (15) adhère parfaitement au film (9) et audit élément (1, 2).

2. Procédé selon la revendication 1, caractérisé en ce que ledit élément (1, 2) comprend une nappe textile de renfort (8) préimprégnée d'une résine thermodurcissable ou d'une résine thermoplastique.

3. Procédé selon la revendication 1 ou 2, caractérisé en ce que ledit élément (1, 2) comprend un renfort (8) métallique.

4. Procédé selon la revendication 1 ou 2, caractérisé en ce que la nappe textile de renfort (8) est préimprégnée d'une résine thermodurcissable humide ou partiellement réticulée choisie dans le groupe constitué par les polyesters, les époxydes, le polyuréthanes.

5. Procédé selon la revendication 2 ou 4, caractérisé en ce que la nappe textile de renfort (8) est préimprégnée d'une résine thermoplastique choisie dans le groupe constitué par les polyamides, les polycarbonates, les PEI (Polyéther lmide).

6. Procédé selon l'une quelconque des revendications 2, 4 ou 5, caractérisé en ce que la nappe textile de renfort (8) est à base de fibres tissées ou non tissées en verre, en carbone ou en kevlar.

7. Procédé selon la revendication 3, caractérisé en ce que le renfort métallique est choisi parmi les aciers, alliage d'aluminium ou métal amorphe.

8. Procédé selon l'une quelconque des revendications 1 à 7, caractérisé en ce qu'un film solide (9, 90) est prévu sur les faces internes (3, 4) de l'un et l'autre des premier (1) et second (2) éléments.

9. Procédé selon l'une quelconque des revendications 1 à 8, caractérisé en ce que le film solide (9) est en polyuréthane.

10. Procédé selon l'une quelconque des revendications 1 à 8, caractérisé en ce que le film solide (9) est en ABS (Acrylonitrile Butadiène Styrène).

11. Procédé selon l'une quelconque des revendications 1 à 8, caractérisé en ce que le film solide (9) est un copolyamide.

12. Procédé selon l'une quelconque des revendications 1 à 8, caractérisé en ce que le film (9) est multicouche.

13. Procédé selon l'une quelconque des revendications 1 à 12, caractérisé en ce que le film solide (9) présente une épaisseur comprise entre un et dix dixièmes de millimètre.

14. Ski à structure composite, comportant au moins un premier (1) et un second (2) éléments solidarisés l'un à l'autre par un noyau en mousse (15) cellulaire, caractérisé en ce qu'un film de polymères (9) est présent à l'interface entre ladite mousse cellulaire (15) et l'un au moins desdits premier (1) et second (2) éléments, ledit élément (1, 2) étant au contact du film (9) par un renfort (8).

15. Ski selon la revendication 14, caractérisé en ce que le film (9) ne couvre que la surface du renfort (8).

16. Ski selon la revendication 14 ou 15, caractérisé en ce que le film (9) couvre la face inférieure (3) du premier élément (1).

17. Ski selon la revendication 14, caractérisé en ce que ledit film (9) est en élastomère polyuréthane thermoplastique.

18. Ski selon la revendication 14, caractérisé en ce que ledit film est en ABS.

19. Ski selon l'une quelconque des revendications 14 à 18, caractérisé en ce que ledit élément (1, 2) comprend une couche de renfort (8) à base d'une résine choisie dans le groupe constitué par les polyesters, époxydes, polyuréthanes, polyamides, polycarbonates, PEI (Polyéther Imide).

20. Ski selon l'une quelconque des revendications 14 à 18, caractérisé en ce que ledit élément (1, 2) comprend un renfort métallique.

21. Ski selon la revendication 20, caractérisé en ce que le renfort métallique est choisi parmi les aciers, alliage d'aluminium ou métal amorphe.

## Patentansprüche

1. Verfahren zur Herstellung eines spritzgußgeformten Ski, das einen Schritt der Einspritzung eines härtbaren Schaumes, der Ausdehnung und der Aushärtung des härtbaren Schaumes zwischen zumindest einem ersten Element (1) und einem zweiten Element (2) umfaßt, **dadurch gekennzeichnet,** daß es zumindest einen vorhergehenden Schritt umfaßt, in dessen Verlauf man zumindest eines der Elemente (1, 2) durch die Aufeinanderfolge der folgenden Operationen herstellt:
- Vorsehen einer festen Schicht (9) auf der Basis von Polymeren, die gute Hafteigenschaften mit dem härtbaren Schaum (15) bei dem späteren Schritt der Einspritzung aufweisen,
- Vorsehen des Elementes (1, 2) in Form eines Substrates, dessen innere Seite aus zumindest einer Verstärkung (8) gebildet ist,
- Anordnen der festen Schicht (9) auf der inneren Seite des Elementes (1, 2), um zumindest die Verstärkung zu überdecken,
- Heißformen oder -pressen der Schicht (9) und des Elementes (1, 2), um den Film (9) auf dem Element (1, 2) haften zu lassen,
derart, daß während des Schrittes vor der Einspritzung die feste Schicht (9) einen Schirm zwischen dem härtbaren Schaum (15) und zumindest der Verstärkung (18) bildet, und daß nach der Einspritzung und dem Aushärten der Schaum (15) perfekt auf der Schicht (9) und dem Element (1, 2) haftet.

2. Verfahren nach Anspruch 1, dadurch gekennzeichnet, daß das Element (1, 2) einen textilen Verstärkungsmantel (8) umfaßt, der mit einem wärmehärtbaren Harz oder einem thermoplastischen Harz vorimprägniert ist.

3. Verfahren gemäß Anspruch 1 oder 2, dadurch gekennzeichnet, daß das Element (1, 2) eine metallische Verstärkung (8) umfaßt.

4. Verfahren gemäß Anspruch 1 oder 2, dadurch gekennzeichnet, daß der textile Verstärkungsmantel (8) mit einem feuchten oder teilweise vernetzten wärmehärtbaren Harz vorimprägniert ist, das aus der Gruppe gewählt ist, die durch die Polyester, die Epoxide und die Polyurethane gebildet ist.

5. Verfahren gemäß Anspruch 2 oder 4, dadurch gekennzeichnet, daß der textile Verstärkungsmantel (8) mit einem thermoplastischen Harz vorimprägniert ist, das aus der Gruppe gewählt ist, die durch die Polyamide, die Polycarbonate, die PEI (Polyetherimide) gebildet ist.

6. Verfahren gemäß einem der Ansprüche 2, 4 oder 5, dadurch gekennzeichnet, daß der textile Verstärkungsmantel (8) auf der Basis von gewebten oder nicht gewebten Fasern aus Glas, Kohlenstoff oder Kevlar ist.

7. Verfahren gemäß Anspruch 3, dadurch gekennzeichnet, daß die metallische Verstärkung aus Stahl, einer Aluminiumlegierung oder amorphem Metall gewählt ist.

8. Verfahren gemäß einem der Ansprüche 1 bis 7, dadurch gekennzeichnet, daß eine feste Schicht (9, 90) auf den inneren Seiten (3, 4) des einen und anderen des ersten (1) und zweiten (2) Elementes vorgesehen ist.

9. Verfahren gemäß einem der Ansprüche 1 bis 8, dadurch gekennzeichnet, daß die feste Schicht (9) aus Polyurethan besteht.

10. Verfahren gemäß einem der Ansprüche 1 bis 8, dadurch gekennzeichnet, daß die feste Schicht (9) aus ABS (Acrylnitril-Butadien-Styrol) besteht.

11. Verfahren gemäß einem der Ansprüche 1 bis 8, dadurch gekennzeichnet, daß die feste Schicht (9) ein Copolyamid ist.

12. Verfahren gemäß einem der Ansprüche 1 bis 8, dadurch gekennzeichnet, daß die Schicht (9) mehrschichtig ist.

13. Verfahren gemäß einem der Ansprüche 1 bis 12, dadurch gekennzeichnet, daß die feste Schicht (9) eine Dicke zwischen einem und zehn zehntel Milimeter aufweist.

14. Ski mit zusammengesetztem Aufbau, der zumindest ein erstes (1) und ein zweites (2) Element aufweist, die miteinander durch einen zellularen Kern aus Schaum (15) verbunden sind, dadurch gekennzeichnet, daß eine Polymerschicht (9) an der Schnittstelle zwischen dem zellularen Schaum (15) und zumindest einem der ersten (1) und zweiten (2) Elemente vorliegt, wobei das Element (1, 2) in Kontakt mit der Schicht (9) durch eine Verstärkung (8) steht.

15. Ski gemäß Anspruch 14, dadurch gekennzeichnet, daß die Schicht (9) nur die Oberfläche der Verstärkung (8) bedeckt.

16. Ski gemäß Anspruch 14 oder 15, dadurch gekennzeichnet, daß die Schicht (9) die untere Seite (3) des ersten Elementes (1) bedeckt.

17. Ski gemäß Anspruch 14, dadurch gekennzeichnet, daß die Schicht (9) aus einem thermoplastischen elastomeren Polyurethan besteht.

18. Ski gemäß Anspruch 14, dadurch gekennzeichnet, daß die Schicht aus ABS besteht.

19. Ski gemäß einem der Ansprüche 14 bis 18, dadurch gekennzeichnet, daß das Element (1, 2) eine Verstärkungsschicht (8) auf der Basis eines Harzes umfaßt, das aus der Gruppe ausgewählt ist, die durch die Polyester, Epoxide, Polyurethane, Polyamide, Polycarbonate, PEI (Polyetherimide) gebildet ist.

20. Ski gemäß einem der Ansprüche 14 bis 18, dadurch gekennzeichnet, daß das Element (1, 2) eine metallische Verstärkung umfaßt.

21. Ski gemäß Anspruch 20, dadurch gekennzeichnet, daß die metallische Verstärkung aus Stahl, Aluminiumlegierung oder amorphem Metall gewählt ist.

## Claims

1. Method for manufacturing an injected ski, comprising a step for injecting the components of an hardenable foam, of expanding and hardening of said hardenable foam, between at least one first element (1) and a second element (2),
characterized in that it comprises at least one previous step during which at least one of elements (1, 2) is manufactured by the succession of the following operations:
- providing a solid polymer based film (9) having good adhesive properties with the hardenable foam (15) during a step following that of the injection,
- providing said element (1, 2) in the form of a substrate whose internal surface is formed of at least one reinforcement (8),
- locating said solid film (9) on said internal surface of element (1, 2) to cover at least said reinforcement,
- hot forming or pressing the film (9) and element (1, 2) to make the film (9) adhere to element (1, 2),
such that, during the later injection step, the solid film (9) constitutes a screen between the hardenable foam (15) and at least the reinforcement (8), and, after injection and hardening, the foam (15) adheres perfectly to film (9) and to said element (1, 2).

2. Method as defined by claim 1, characterized in that said element (1, 2) comprises a textile reinforcement web (8) preimpregnanted with a thermohardenable resin or a thermoplastic resin.

3. Method as defined by claims 1 or 2, characterized in that said element (1, 2) comprises a metallic reinforcement (8).

4. Method as defined by claims 1 or 2, characterized in that the textile reinforcement web (8) is preimpregnanted with a moist or partially crosslinked thermohardenable resin selected from the group constituted by polyesters, epoxys, or polyurethanes.

5. Method as defined by claims 2 or 4, characterized in that the textile reinforcement web (8) is preimpregnanted with a thermoplastic resin selected from the group constituted by polyamides, polycarbonates, and PEI (Polyether Imides).

6. Method as defined by any of claims 2, 4 or 5, characterized in that the textile reinforcement web (8) is made of woven or non-woven glass, carbon or kevlar fibers.

7. Method as defined by claim 3, characterized in that the metallic reinforcement is chosen from among steels, aluminum alloys, or amorphous metal.

8. Method as defined by any of claims 1 to 7, characterized in that a solid film (9, 90) is provided on internal surfaces (3, 4) of one of both the first (1) and second (2) elements.

9. Method as defined by any of claims 1 to 8, characterized in that the solid film (9) is made of polyurethane.

10. Method as defined by any of claims 1 to 8, characterized in that the solid film (9) is made of ABS (Acyrlonitrile Butadiene Styrene).

11. Method as defined by any of claims 1 to 8, characterized in that the solid film (9) is a copolyimide.

12. Method as defined by any of claims 1 to 8, characterized in that the film (9) is multi-layered.

13. Method as defined by any of claims 1 to 12, characterized in that the solid film (9) has a thickness comprised between 1 and 10 tenths of a millimeter.

14. Ski having a composite structure, comprising at least one first (1) and one second (2) elements affixed to one another by a core (15) made of cellular foam, characterized in that a polymer film (9) is present at the interface between said cellular foam (15) and at least one of said first (1) and second (2) elements, said element (1, 2) being in contact with film (9) by a reinforcement (8).

15. Ski as defined by claim 14, characterized in that the film (9) only covers the surface of reinforcement (8).

16. Ski as defined by claims 14 or 15, characterized in that the film (9) covers the lower surface (3) of the first element (1).

17. Ski as defined by claim 14, characterized in that said film (9) is made of a thermoplastic polyurethane elastomer.

18. Ski as defined by claim 14, characterized in that said film is made of ABS.

19. Ski as defined by any of claims 14 to 18, characterized in that said element (1, 2) comprises a reinforcement layer (8) based on a resin selected from the group constituted of polyesters, epoxys, polyurethanes, polyamides, polycarbonates, PEI (Polyether Imide).

20. Ski as defined by any of claims 14 to 18, characterized in that said element (1, 2) comprises a metallic reinforcement.

21. Ski as defined by claim 20, characterized in that the metallic reinforcement is selected from among steels, aluminum alloy, or amorphous metal.
